# EUROPÄISCHE PATENTANMELDUNG

(11) **EP 0 536 465 A1**
(43) Veröffentlichungstag der Anmeldung: **14.04.1993**
(21) Anmeldenummer: 92104737.9
(22) Anmeldetag: 19.03.1992
(51) Int. Cl.: H04B 1/38

(54) **Mobilfunkgerät**

(30) Priorität: 04.10.1991 DE 9112345 U
(71) Anmelder: ROBERT BOSCH GMBH, 70442 Stuttgart (DE)
(72) Erfinder: Dürbeck, Horst-Peter, W-1000 Berlin 33 (DE); Adam, Manfred, W-1000 Berlin 41 (DE)

(57) **Zusammenfassung**

Ausgehend von einem Mobilfunkgerät, das wahlweise in ein Fahrzeug einbaubar oder mit einem abnehmbaren Traggriff versehbar ist oder mit einem Traggurt über der Schulter getragen werden kann, soll ein Mobilfunkgerät darüber hinaus die Möglichkeit haben, ohne einen komplizierten Einbau im Fahrzeug benutzt zu werden.

Zu diesem Zweck trägt das Mobilfunkgerät einen dachförmigen Aufsatz (25) mit einer Auflage (26) für einen Handapparat (28) und mit einer Aufnahme für einen Datenträger (31). Ein Gurt (36) des Mobilfunkgerätes wird um die Rücklehne (14) des Beifahrersitzes (12) herumgelegt und festgezogen. Das Mobilfunkgerät wird mit einem Anschluß (16) des Fahrzeuges verbunden, an dem die Spannung der Fahrzeugbatterie vorliegt.

## Beschreibung

Die Erfindung geht von einem Mobilfunkgerät nach dem Oberbegriff des Anspruchs 1 aus.

Es ist ein derartiges Mobilfunkgerät bekannt (DE-OS 37 37 049), das wahlweise in ein Fahrzeug einbaubar ist oder mit einem abnehmbaren Traggriff und mit einem Batteriekasten versehen als in der Hand zu tragendes Mobilfunkgerät verwendet werden kann. Mit einem an dem Sende- und Empfangsgerät des Mobilfunkgerätes lösbar befestigten Traggurt kann das Gerät darüber hinaus auch mit der Schulter getragen werden.

Der Erfindung liegt die Aufgabe zugrunde, ein Mobilfunkgerät mit möglichst einfachen Mitteln in einem Fahrzeug benutzbar zu machen, wobei auf eine bequeme und sichere Bedienbarkeit des Gerätes Wert gelegt wird.

Diese Aufgabe wird durch das Mobilfunkgerät gemäß Anspruch 1 gelöst. Damit ist insbesondere der Vorteil verbunden, daß das Sende- und Empfangsgerät ohne eigenes Stromversorgungsteil, d.h. ohne einen mit dem Sende- und Empfangsgerät verbundenen Stromversorgungsblock, auskommt. Ein weiterer Vorteil besteht darin, daß auf eine besondere, in das Armaturenbrett oder unterhalb desselben angeordnete Halterung für das Sende- und Empfangsgerät verzichtet werden kann.

Vorteilhafte Weiterbildungen der Erfindung ergeben sich aus den Unteransprüchen.

Ein Ausführungsbeispiel der Erfindung ist in der Zeichnung anhand mehrerer Figuren dargestellt und wird im folgenden naher beschrieben. Es zeigen
- Fig. 1: ein Kraftfahrzeug mit auf dem Beifahrersitz befestigtem Mobilfunkgerät,
- Fig. 2: eine Ansicht eines Mobilfunkgerätes mit aufgelegtem Handapparat,
- Fig. 3: eine Draufsicht zu Fig. 2 und
- Fig. 4: eine Seitenansicht zu Fig. 2.

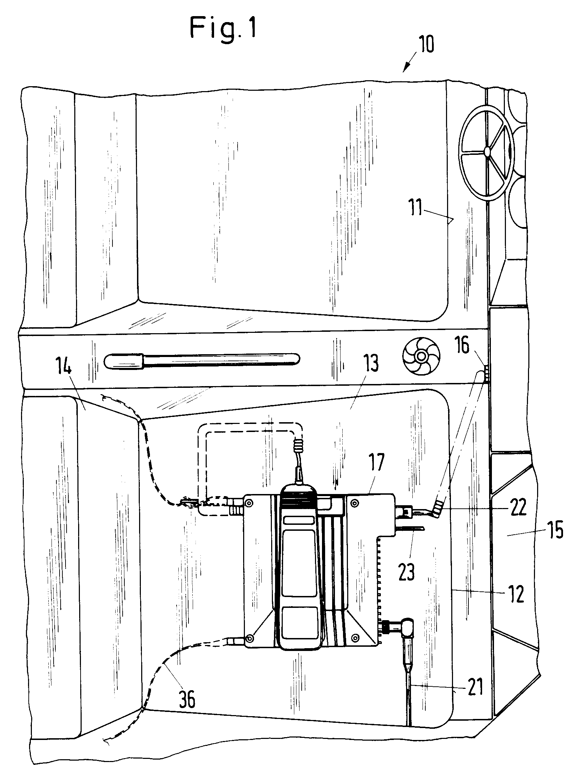

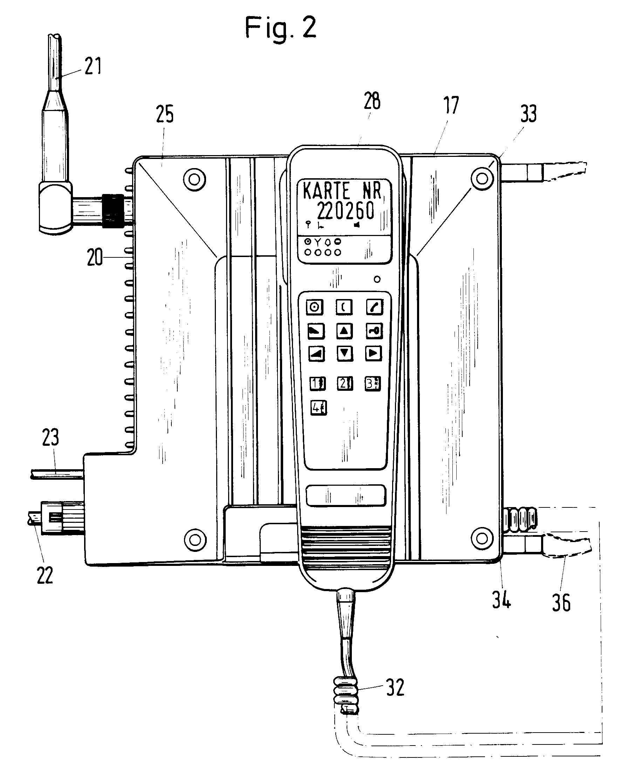

In Fig. 1 ist 10 ein Fahrzeug, das ist insbesondere ein Kraftfahrzeug, mit einem Fahrersitz 11 und einem Beifahrersitz 12, dessen Sitzteil mit 13 und dessen Rückenlehne mit 14 bezeichnet sind. Ein Armaturenbrett 15 des Fahrzeuges weist einen Steckverbinderteil 16 auf, an dem die Spannung der in Fig. 1 der Übersichtlichkeit halber nicht gezeigten Fahrzeugbatterie zur Verfügung steht. Auf dem Sitzteil 13 des Beifahrersitzes 12 ruht ein Mobilfunkgerät 17, dessen Aufbau in den Fig. 2 bis 4 gezeigt ist.

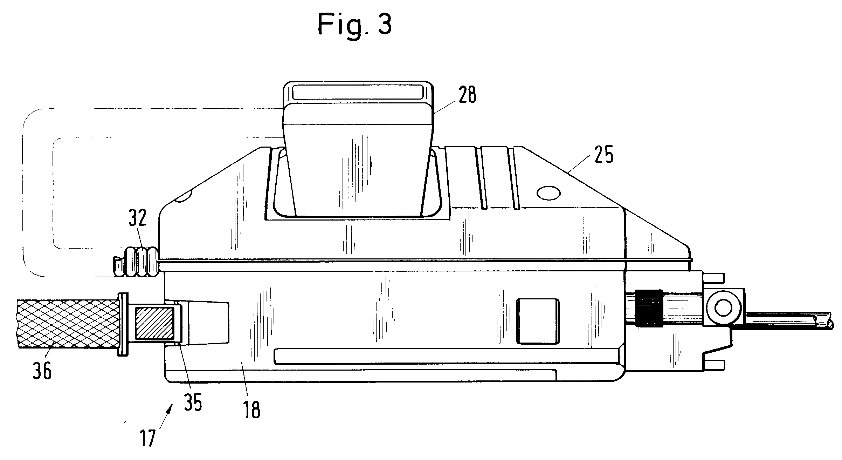

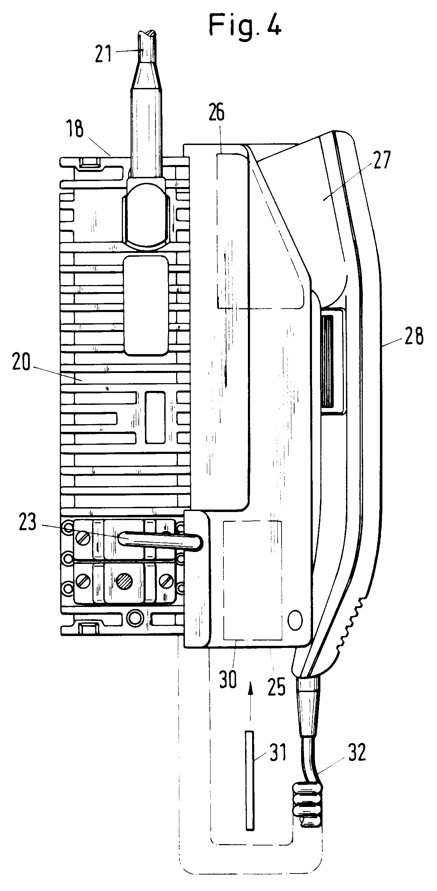

Das Mobilfunkgerät 17 weist ein im wesentlichen quaderförmiges Sende- und Empfangsgerät 18 (Fig. 3 und 4) auf, an dessen einer Seitenwand 20 eine Stabantenne 21 (Fig. 2) lösbar befestigt ist. An derselben Seitenwand 20 ist auch noch ein erstes Verbindungskabel 22 lösbar befestigt, das mit dem Steckverbinderteil 16 verbindbar ist, und ein zweites Verbindungskabel 23, dessen Bedeutung weiter unten beschrieben wird.

Auf der Oberseite des Sende- und Empfangsgerätes 18 ist ein vorzugsweise dachförmiger Aufsatz 25 angeordnet, z. B. angeschraubt, in den eine Handapparat-Auflage 26 (Fig. 4) für die rastende Halterung der Hörmuschel 27 eines Handapparates 28 sowie eine Aufnahmevorrichtung 30 für einen kartenförmigen Datenträger 31, das ist z. B. eine Chipkarte, integriert ist. Auflage 26 und Aufnahmevorrichtung 30 sind dem Fachmann bekannt und deshalb in Fig. 4 nur durch strichpunktierte Linien symbolisiert. Das zweite Verbindungskabel 23 stellt die elektrische Verbindung zwischen dem Sende- und Empfangsgerät 18 und der Aufnahmevorrichtung 30 her. Der Handapparat 28 ist über ein drittes Verbindungskabel 32 mit dem Sende- und Empfangsgerät verbunden.

Die Form des Aufsatzes 25 entspricht vorzugsweise einem abgeflachten Walmdach, und der Handapparat 28 liegt derart auf dem Aufsatz, daß er leicht und ungehindert mit einer Hand ergriffen werden kann.

An zwei benachbarten Eckbereichen 33, 34 des Sende- und Empfangsgerätes 17 (Fig. 2) sind dem Fachmann bekannte Haltemittel 35 (Fig. 3) zum lösbaren Befestigen eines Traggurtes 36 vorgesehen.

Das vorstehend beschriebene Mobilfunkgerät 17 wird z. B. folgendermaßen in Betrieb genommen. Zunächst wird das Mobilfunkgerät 17 mit aufgelegtem Handapparat auf die Sitzfläche 13 des Beifahrersitzes 12 gelegt und mit dem Traggurt 36 an der Rückenlehne 14 des Beifahrersitzes befestigt. Dann wird die Sende- und Empfangsantenne 21 auf das Sende- und Empfangsgerät 18 gesteckt und der Stab in eine etwa vertikale Lage gebracht. Anschließend werden die Enden des ersten Verbindungskabels 22 (Fig. 1) mit dem Sende- und Empfangsgerät 18 und dem Steckverbinderteil 16 am Armaturenbrett 15 verbunden. Damit ist das Mobilfunkgerät 17 betriebsbereit.

Soll das Mobilfunkgerät 17 als in der Hand zu tragendes Gerät verwendet werden, so tritt an die Stelle des Aufsatzes 25 ein Stromversorgungsaufsatz mit Batterien und an die Stelle des Traggurtes 36 ein Traggriff sowie eine mit dem Traggriff verbundene Aufnahmevorrichtung und eine Auflage. Das erste Verbindungskabel 22 entfällt in diesem Fall.

## Patentansprüche

1. Mobilfunkgerät mit einem quaderförmigen Sende- und Empfangsgerät, mit einer elektrisch und mechanisch damit verbundenen Auflage für einen Handapparat und für eine Aufnahmevorrichtung zur Aufnahme eines Datenträgers, mit einer Sende- und Empfangsantenne und mit einem mit dem Sende- und Empfangsgerät lösbar verbundenen Traggurt, dadurch gekennzeichnet, daß das ohne eigene Stromversorgung ausgebildete Sende- und Empfangsgerät (18) auf einer großflächigen Seite einen dachförmigen Aufsatz (25) trägt, in den die Auflage (26) und die Aufnahmevorrichtung (30) integriert sind und auf dessen höchstliegendem Bereich der Handapparat (28) ablegbar ist, daß der Traggurt (36) derart bemessen ist, daß er zwecks Halterung des auf der Sitzfläche (13) eines Beifahrersitzes (12) des Fahrzeuges (10) abgelegte Sende- und Empfangsgerätes (18) um die Rückenlehne (14) des Beifahrersitzes (12) herum festziehbar ist und daß das Sende- und Empfangsgerät mit einem die Spannung der Fahrzeugbatterie führenden Anschluß (16) des Fahrzeuges verbindbar ist.

2. Mobilfunkgerät nach Anspruch 1, dadurch gekennzeichnet, daß der Aufsatz (25) die Form eines abgeflachten Walmdaches hat.

3. Mobilfunkgerät nach Anspruch 1, dadurch gekennzeichnet, daß die Sende- und Empfangsantenne (21) eine mit dem Sende- und Empfangsgerät (18) lösbar verbundene Stabantenne ist.

4. Mobilfunkgerät nach einem der Ansprüche 1 bis 3, dadurch gekennzeichnet, daß für die Verbindung zwischen dem Sende- und Empfangsgerät (18) und dem Anschluß (16) ein Verbindungskabel (22) vorgesehen ist, das an den Enden mit je einem Steckverbindungselement versehen ist.

5. Mobilfunkgerät nach einem der Ansprüche 1 bis 4 dadurch gekennzeichnet, daß der Aufsatz (25) über Schraubverbindungen mit dem Sende- und Empfangsgerät (18) lösbar verbunden ist.
